# EUROPÄISCHE PATENTSCHRIFT

(11) **EP 3 997 782 B1**
(45) Veröffentlichungstag und Bekanntmachung des Hinweises auf die Patenterteilung: **02.04.2025**
(21) Anmeldenummer: 20735265.9
(22) Anmeldetag: 17.06.2020
(51) Int. Cl.: H02M 1/15, H02J 1/02, H02M 5/44, H02M 1/12

(54) **ENERGIEVERSORGUNGSSYSTEM ZUR SPEISUNG EINES ZWISCHENKREISES UND VERFAHREN ZUM BETREIBEN DES SYSTEMS**
POWER SUPPLY SYSTEM FOR A LINK AND METHOD TO CONTROL THE SYSTEM
SYSTÈME D'ALIMENTATION EN ÉNERGIE POUR ALIMENTER UN CIRCUIT INTERMÉDIAIRE ET PROCÉDÉ POUR FAIRE FONCTIONNER LEDIT SYSTÈME

(30) Priorität: 10.07.2019 DE 102019004756
(43) Veröffentlichungstag der Anmeldung: 18.05.2022
(73) Patentinhaber: SEW-Eurodrive GmbH & Co, 76646 Bruchsal (DE)
(72) Erfinder: SCHMICH, Patrick, 75015 Bretten (DE); ZELLER, Simon, 706689 Karlsdorf-Neuthard (DE)
(86) Internationale Anmeldenummer: PCT/EP2020/025289
(87) Internationale Veröffentlichungsnummer: WO 2021/004655

(56) Entgegenhaltungen:
- EP-A1- 2 654 160
- DE-A1- 102011 110 197
- JP-A- 2012 165 629
- US-A- 6 115 269
- US-A1- 2015 236 504
- MORENO V M ET AL: "A Comparative Analysis of Real-Time Algorithms for Power Signal Decomposition in Multiple Synchronous Reference Frames", IEEE TRANSACTIONS ON POWER ELECTRONICS, INSTITUTE OF ELECTRICAL AND ELECTRONICS ENGINEERS, USA, vol. 22, no. 4, 1 July 2007 (2007-07-01), pages 1280 - 1289, XP011186933, ISSN: 0885-8993, DOI: 10.1109/TPEL.2007.900484

## Beschreibung

Die Erfindung betrifft ein System, insbesondere Energieversorgungssystem, zur Speisung eines Zwischenkreises und ein Verfahren zum Betreiben eines Systems.

Es ist allgemein bekannt, dass Störspannungen auf einer bereit gestellten Versorgungsspannung vorhanden sein können.

Aus der DE 10 2011 110 197 A1 ist als nächstliegender Stand der Technik ein System mit einem Zwischenkreis bekannt.

Aus der US 2015/236504 A1 ist ein Leistungssteuerungsgerät bekannt.

Aus der US 6 115 269 A ist eine Steuerungsanordnung für ein aktives Filter bekannt.

Aus der EP 2 654 160 A1 ist ein Verfahren zum Stabilisieren einer elektrischen Spannung in einem Zwischenkreis bekannt.

Aus der XP011186933 ist eine vergleichende Analyse eines Realzeitalgorithmus eines einer Leistungssignalzerlegung bekannt.

Aus der JP 2012 165629 A ist eine Analyse mittels einer Fouriertransformation bekannt.

Der Erfindung liegt daher die Aufgabe zugrunde, eine Verringerung von Störungen zu erreichen.

Erfindungsgemäß wird die Aufgabe bei dem System nach den in Anspruch 1 und bei dem Verfahren nach den in Anspruch 8 angegebenen Merkmalen gelöst.

Von Vorteil ist dabei, dass Störungen verminderbar sind. Dabei werden Störungen aus einem ersten Frequenzbereich von einem ersten Energiespeicher vermindert und Störungen aus einem anderen a Frequenzbereich von einem zweiten Enegiespeicher vermindert. Denn die beiden Energiespeicher sind unterschiedlich ausgeführt und somit beim Entladen unterschiedlich schnell sowie auch beim Laden unterschiedlich schnell. Jeder Energiespeicher ist also zum Kompensieren, also in der praktischen Anwendung nur zum Reduzieren, von periodischen Störungen in unterschiedlichen Frequenzbereichen geeignet.

Bei einer vorteilhaften Ausgestaltung steuert die Steuerung einen vierten Wandler, insbesondere DC/DC-Wandler oder Stromsteller, an,
wobei ein zweiter Energiespeicher über den vierten Wandler mit dem Zwischenkreis verbunden ist,
insbesondere wobei der Zwischenkreis von einem dritten Enegiespeicher über den vierten Wandler stützbar ist,
insbesondere am ersten Anschluss des vierten Wandlers ein dritter Energiespeicher und der zweite Anschluss des vierten Wandlers mit dem Zwischenkreis und/oder dem Sensor verbunden ist,
wobei der erste, dritte und der zweite Energiespeicher unterschiedlich sind, insbesondere ein unterschiedliches dynamisches Verhalten aufweisen und/oder unterschiedliche Entladezeitkonstanten aufweisen. Von Vorteil ist dabei, dass für verschiedene Frequenzberiech verschieden Energiespeicher vorsehbar sind.

Bei einer vorteilhaften Ausgestaltung weist der erste Energiespeicher einen Akkumulator aufweist und der zweite Energiespeicher einen Elektrolytkondensator oder Doppelschichtkondensator auf. Von Vorteil ist dabei, dass der Akkumulator Gleichanteile und niederfrequente Schwankungen des Stromes oder der Spannung im Zwischenkreis stützt. Dabei weist der Akkumulator eine hohe Kapazität auf im Vergleich zu den beiden anderen Sorten. Allerdings ist der Akkumulator, beispielsweise eine Lithium-Ionen-Akkumulator, bezüglich der Dynamik beim Laden sowie beim Entladen zu langsam, um höher frequente Störungen auszuregeln

Bei einer alternativen vorteilhaften Ausgestaltung weist der erste Energiespeicher einen Akkumulator, der zweite Energiespeicher einen Elektrolytkondensator und der dritte Energiespeicher einen Doppelschichtkondensator auf. Von Vorteil ist dabei, dass der Akkumulator Gleichanteile und niederfrequente Schwankungen des Stromes oder der Spannung im Zwischenkreis stützt. Dabei weist der Akkumulator eine hohe Kapazität auf im Vergleich zu den beiden anderen Sorten. Allerdings ist der Akkumulator, beispielsweise eine Lithium-Ionen-Akkumulator, bezüglich der Dynamik beim Laden sowie beim Entladen zu langsam, um höher frequente Störungen auszuregeln Da die höchste Dynamik der Doppelschichtkondensator, insbesondere Ultracap, aufweist, wird dieser verwendet, um den am höchsten liegenden Frequenzbereich zu beruhigen.

Erfindungsgemäß steuert die Steuerung einen ersten Wandler, insbesondere DC/DC-Wandler oder Stromsteller, an,
der aus einem Versorgungsmodul gespeist ist, welches an dem ersten Anschluss des ersten Wandlers angeschlossen ist,
wobei der zweite Anschluss des ersten Wandlers mit dem Zwischenkreis elektrisch verbunden ist, insbesondere am Zwischenkreis angeschlossen ist,
insbesondere wobei das Versorgungsmodul einen netzgespeisten Gleichrichter aufweist. Von Vorteil ist dabei, dass der Zwischenkreis stützbar ist. Wenn die Spannung beziehungsweise der Strom am oder im Zwischenkreis einen kritischen Schwellwert unterschreitet, wird Energie vom Versorgungsmodul über den ersten Wandler in den Zwischenkreis eingespeist und somit der Zwischenkreis gestützt.

Bei einer vorteilhaften Ausgestaltung steuert die Steuerung einen fünften Wandler, insbesondere DC/DC-Wandler oder Stromsteller, an,
aus dem der dritte Energiespeicher aufladbar ist. Von Vorteil ist dabei, dass bei Vorliegen von ausschließlich derart hochfrequenten Störungen, dass diese vom dritten Energiespeicher kompensierbar sind, trotzdem vermieden wird, dass der dritte Energiespeicher nicht vollständig entleert wird.

Bei einer vorteilhaften Ausgestaltung steuert die Steuerung einen sechsten Wandler, insbesondere DC/DC-Wandler oder Stromsteller, an,
aus dem der zweite Energiespeicher aufladbar ist. Von Vorteil ist dabei, dass bei Vorliegen von ausschließlich derart hochfrequenten Störungen, dass diese vom zweiten Energiespeicher kompensierbar sind, trotzdem vermieden wird, dass der zweite Energiespeicher nicht vollständig entleert wird.

Bei einer vorteilhaften Ausgestaltung steuert die Steuerung einen siebten Wandler, insbesondere DC/DC-Wandler oder Stromsteller, an,
aus dem der erste Energiespeicher aufladbar ist. Von Vorteil ist dabei, dass Von Vorteil ist dabei, dass bei Vorliegen von ausschließlich derart hochfrequenten Störungen, dass diese vom ersten Energiespeicher kompensierbar sind, trotzdem vermieden wird, dass der erste Energiespeicher nicht vollständig entleert wird.

Bei einer vorteilhaften Ausgestaltung ist oder sind der fünfte, sechste und/oder siebte Wandler aus dem Versorgungsmodul gespeist. Von Vorteil ist dabei, dass der Gleichrichter des Versorgungsmoduls den ersten und den fünften, sechsten und siebten Wandler speist. Somit ist ein einziger netzgespeister Gleichrichter ausreichend.

Bei einer vorteilhaften Ausgestaltung ist die Steuerung mittels eines Datenbusses mit einem übergeordneten Rechner verbunden, insbesondere zum Datenaustausch. Von Vorteil ist dabei, dass eine Prädiktion der Störungen ausführbar ist und daran angepasst die Dynamik des jeweiligen Wandlers beziehungswiese Energiespeichers rechtzeitig anpassbar ist. Denn eine übergeordnete Steuerung gibt die Bewegungsabläufe von Mobilteilen einer Anlage vor. Wichtig ist bei dem Verfahren zum Betreiben eines Systems, dass zeitlich wiederkehrend Werte einer physikalischen Größe, insbesondere Stromwert im Zwischenkreis oder Spannung am Zwischenkreis, erfasst werden,
wobei in einem ersten Verfahrensschritt ein Verlauf der in einer ersten Zeitspanne, insbesondere Zykluszeit, erfassten Werte fouriertransformiert wird, insbesondere eine FFT durchgeführt wird,
wobei in einem zweiten Verfahrensschritt zumindest ein Maximum, insbesondere ein lokales Maximum, des fouriertransformierten Verlaufs bestimmt wird und ein auf die Frequenz gerichtetes erstes Kompensationssignal bestimmt wird und dem Zwischenkreis zugeführt wird, insbesondere mittels des ersten Wandlers,
wobei in dem ersten Verfahrensschritt der Verlauf der in einer zweiten Zeitspanne, insbesondere Zykluszeit, erfassten Werte fouriertransformiert wird, insbesondere eine FFT durchgeführt wird,
wobei zumindest ein Maximum, insbesondere ein lokales Maximum, des in der zweiten Zeitspanne erfassten Verlaufs, fouriertransformierten Verlaufs bestimmt wird und ein auf die Frequenz gerichtetes zweites Kompensationssignal bestimmt wird und dem Zwischenkreis zugeführt wird, insbesondere mittels des zweiten Wandlers.

Von Vorteil ist dabei, dass die Fouriertransformation in einfacher Weise mittels einer FFT ausführbar ist. Auch die Bestimmung der zu dem Maximum gehörigen Frequenz ist einfache ausführbar und somit das Kompensationssignal für diese Frequenz einfache und ohne besonderen Rechenaufwand bestimmbar.

Bei einer vorteilhaften Ausgestaltung ist die erste Zeitspanne länger als die zweite Zeitspanne,
wobei die erste Zeitspanne mit der zweiten Zeitspanne überlappt. Von Vorteil ist dabei, dass die Kompensationssignale der unterschiedlichen Frequenzbereiche unabhängig voneinander bestimmbar sind. Somit sind die bei kurzen Zeitspannen bestimmten Kompensationssignale schneller aktualisiert als die bei längeren Zeitspannen bestimmten.

Bei einer vorteilhaften Ausgestaltung wird in dem ersten Verfahrensschritt der Verlauf der in einer dritten Zeitspanne, insbesondere Zykluszeit, erfassten Werte fouriertransformiert, insbesondere eine FFT durchgeführt,
wobei zumindest ein Maximum, insbesondere ein lokales Maximum, des in der dritten Zeitspanne erfassten Verlaufs, fouriertransformierten Verlaufs bestimmt wird und ein auf die Frequenz gerichtetes drittes Kompensationssignal bestimmt wird und dem Zwischenkreis zugeführt wird, insbesondere mittels des dritten Wandlers,
insbesondere wobei die dritte Zeitspanne kürzer ist als die zweite Zeitspanne. Von Vorteil ist dabei, dass die in verschiedenen Frequenzbereichen arbeitenden Energiespeicher sich gegenseitig ergänzen. Wichtig ist dabei auch, dass das vom jeweiligen Energiespeicher dem Zwischenkreis zugeführte Kompensationssignal wiederum die erfassten Werte verändert, da der Sensor die am Zwischenkreis anliegende Spannung beziehungsweise den im Zwischenkreis fließenden Strom erfasst.

Bei einer vorteilhaften Ausgestaltung wird das jeweilige Kompensationssignal unter Berücksichtigung der zumindest durch das Fouriertransformieren bewirkten Totzeit derart gewählt, dass es einer zu dem Maximum gehörenden periodischen Störung entgegenwirkt. Von Vorteil ist dabei, dass periodische Störungen unterdrückbar sind. Nur bei nichtperiodischen Störungen ist keine vollständige Unterdrückung erreichbar.

Bei einer vorteilhaften Ausgestaltung werden zeitlich wiederkehrend die Verfahrensschritte wiederholt mit einer jeweiligen Zeitspanne, welche derart gewählt ist, dass das zuvor bestimmte Maximum einen Mindestfrequenzabstand von der unteren und oberen Grenzfrequenz aufweist. Von Vorteil ist dabei, dass die Zykluszeit anpassbar ist und somit ein adaptiv lernendes System bereit stellbar ist. Außerdem ist das Signal-Rausch-Verhältnis verbesserbar, wenn der Mindestfreqenzabstand eingehalten ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

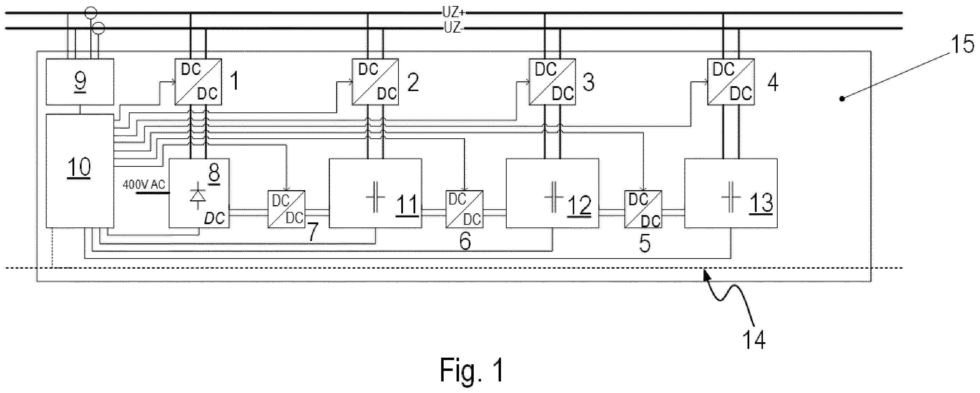

In der Figur 1 ist ein erfindungsgemäßes System zur Bereitstellung und Stützung eines Zwischenkreises schematisch dargestellt.

Wie in Figur 1 dargestellt, weist das System ein netzgespeistes Versorgungsmodul 8 auf, das einen ersten Anschluss eines Wandlers 1, insbesondere bidirektional arbeitenden DC/DC-Stellers oder Stromstellers, speist, wobei der zweite Anschluss des Wandlers 1 einen Zwischenkreis bereitstellt für in der Figur 1 nicht dargestellte Verbraucher.

Außerdem weist der Zwischenkreis nicht nur Leitungsinduktivitäten, sondern auch Pufferkapazitäten auf, welche in der Figur nicht gezeigt sind. Solche im Zwischenkreis verteilt angeordneten Induktivitäten und Kapazitäten führen zur Ausbildung von Resonanzfrequenzen, welche im Betrieb von den Verbrauchern anregbar sind.

Mit dem erfindungsgemäßen System soll die Anregung unterdrückt werden.

Der Zwischenkreis weist ein oberes Potential UZ+ und ein unteres Potential UZ- auf.

Das Versorgungsmodul 8 ist vorzugsweise aus einem Öffentlichen Wechselspannungsversorgungsnetz, insbesondere mit einer Drehspannung, versorgt.

Das Versorgungsmodul 8 weist vorzugsweise einen Gleichrichter auf, an dessen gleichspannungsseitigem Anschluss eine Kapazität zum Glätten angeordnet ist. Aus dieser Gleichspannung wird der erste Anschluss des Wandlers 1 versorgt. Außerdem ist parallel zum ersten Wandler 1 eine aus einem Widerstand und einem steuerbaren Halbleiterschalter gebildete Reihenschaltung angeschlossen. Übersteigt die Spannung an der Kapazität einen Schwellwert, wird der steuerbare Halbleiterschalter geschlossen und somit Energie über den Widerstand in Wärme verwandelt.

Der Wandler 1 wird von einer Steuerung 10 derart angesteuert, dass der mit einem Sensor 9 erfasste Istwert der Spannung (UZ+ - UZ-) des Zwischenkreises auf einen Sollwert hingeregelt wird. Der erste Wandler 1 weist ein dynamisches Verhalten mit einer ersten Zeitkonstante auf.

Ein zweiter, ebenfalls von der Steuerung 10 angesteuerter Wandler 2 ist mit seinem ersten Anschluss mit einem ersten Energiespeicher 11 verbunden und mit seinem zweiten Anschluss mit dem Zwischenkreis, wobei das dynamische Verhalten der dieses Energiespeichers 11 zusammen mit dem Wandler 2 eine zweite Zeitkonstante aufweist, insbesondere welche kleiner ist als die erste Zeitkonstante. Als erster Enegiespeicher ist beispielsweise eine Akkumulatoranordnung, wie Lithium-Ionenakkumulator, einsetzbar.

Ein dritter, ebenfalls von der Steuerung 10 angesteuerter Wandler 3 ist mit seinem ersten Anschluss mit einem zweiten Energiespeicher 12 verbunden und mit seinem zweiten Anschluss mit dem Zwischenkreis, wobei das dynamische Verhalten dieses Energiespeichers 12 zusammen mit dem dritten Wandler 3 eine dritte Zeitkonstante aufweist, insbesondere welche kleiner ist als die zweite Zeitkonstante. Als zweiter Enegiespeicher ist beispielsweise eine übliche Kondensator-Anordnung, wie Elektrolytkondensatoren, einsetzbar.

Ein vierter, ebenfalls von der Steuerung 10 angesteuerter Wandler 4 ist mit seinem ersten Anschluss mit einem dritten Energiespeicher 13 verbunden und mit seinem zweiten Anschluss mit dem Zwischenkreis, wobei das dynamische Verhalten dieses Energiespeichers 13 zusammen mit dem vierten Wandler 3 eine vierte Zeitkonstante aufweist, insbesondere welche kleiner ist als die dritte Zeitkonstante. Als dritter Enegiespeicher ist beispielsweise eine übliche Doppelschicht-Kondensator-Anordnung, wie Ultracap-Anordnung, einsetzbar.

Somit weisen die verschiedenen Energiespeicher (11, 12, 13) unterschiedliche Zeitkonstanten bei der Stützung des Zwischenkreises auf. Der dritte Energiespeicher 13 ist für höherfrequente Stützungen vorgesehen, also für das Verringern hochfrequenter insbesondere periodischer oder quasiperiodisch Störungen. Die beiden anderen Energiespeicher (11, 12) sind für niederfrequentere Störungen vorgesehen.

Vorzugsweise ist jeder der Energiespeicher (11, 12, 13) für die Kompensation eines dem jeweiligen Energiespeicher (11, 12, 13) zugeordneten Frequenzbereichs. Vorzugsweise überlappen die dem jeweiligen Energiespeicher (11, 12, 13) zugeordneten Frequenzbereiche einander nicht.

Die Steuerung 10 erzeugt für jeden der Wandler (1, 2, 3, 4) ein Ansteuersignal, so dass der Wandler die von der Steuerung bestimmte Spannung stellt und somit dem Zwischenkreis zuführt.

Dabei wird der erste Wandler 1 derart angesteuert, dass dem Zwischenkreis Leistung vom ersten Wandler 1 zugeführt wird, wenn die Spannung einen ersten Schwellwert unterschreitet. Wenn die Spannung einen zweiten Schwellwert überschreitet, der höher als der erste Schwellwert ist, wird der steuerbare Halbleiterschalte-r des Versorgungsmoduls 8 geschlossen und somit Leistung vom Zwischenkreis an die Umgebung als Wärme abgeführt.

Somit wird ein gewünschter Bereich an Sollspannung erreicht, wenn keine Störquellen einwirken, die höherfrequent sind als erste Zeitkonstante des ersten Wandlers 1.

Der zweite Wandler 2 wird zum Verringern von periodisch oder quasiperiodischen Störungen verwendet, welche in einem ersten Frequenzband liegen. Hierzu wird der erfasste Spannungsverlauf in einer ersten Zeitspanne, insbesondere Zyklus, erfasst und fouriertransformiert, insbesondere einer FFT unterzogen. Das derart transformierte Signal wird auf Maxima und/oder Spitzenwertewerden untersucht. Lokale Maxima, welche deutlich aus dem Rauschen hervorragen, werden der Bestimmung eines Kompensationssignals zugrunde gelegt. Zu jedem bestimmten Maximum wird durch Rücktransformation und Phasenverschiebung um 180° ein Kompensationssignal bestimmt, welches den mit der zum jeweiligen Maximum gehörigen Frequenz periodischen Signalanteil kompensiert, also zum Verschwinden bringt.

Der Rechenaufwand zur Bestimmung des Kompensationssignals ist bei diskret abgetasteten Signalen gering. Es muss nur der Nulldurchgang des mit der zum jeweiligen Maximum gehörigen Frequenz periodischen Signalanteils bestimmt werden und das Kompensationssignal ist unmittelbar mit demselben Nulldurchgang aber der invertierten Amplitude bestimmbar.

Wie beschrieben, wird die FFT in einem ersten Zeitintervall ausgeführt. In einem nachfolgenden Zeitintervall, insbesondere nachfolgender Zyklus gleicher zeitlichen Länge, wird das als Ansteuersignal für einen oder mehrere steuerbare Halbleiterschalter des zweiten Wandlers 2 bestimmte Schaltmuster von der Steuerung 10 an den zweiten Wandler herausgegeben und somit das Kompensationssignal in den Zwischenkreis eingebracht.

Der dritte Wandler 3 wird zum Verringern von periodisch oder quasiperiodischen Störungen verwendet, welche in einem zweiten Frequenzband liegen. Hierzu wird der erfasste Spannungsverlauf in einer ersten Zeitspanne, insbesondere Zyklus, erfasst und fouriertransformiert, insbesondere einer FFT unterzogen. Dabei ist die erste Zeitspanne, insbesondere Zyklus kürzer als die erste Zeitspanne des zweiten Wandlers 2 Das derart transformierte Signal wird auf Maxima und/oder Spitzenwertewerden untersucht. Lokale Maxima, welche deutlich aus dem Rauschen hervorragen, werden der Bestimmung eines Kompensationssignals zugrunde gelegt. Zu jedem bestimmten Maximum wird durch Rücktransformation und Phasenverschiebung um 180° wiederum ein zweites Kompensationssignal bestimmt, welches den mit der zum jeweiligen Maximum gehörigen Frequenz periodischen Signalanteil kompensiert, also zum Verschwinden bringt.

Das Kompensationssignal weist eine viel höhere Frequenz auf als das für den zweiten Wandler 2 berechnete Kompensationssignal.

Der Rechenaufwand zur Bestimmung des zweiten Kompensationssignals ist bei diskret abgetasteten Signalen gering. Es muss nur der Nulldurchgang des mit der zum jeweiligen Maximum gehörigen Frequenz periodischen Signalanteils bestimmt werden und das Kompensationssignal ist unmittelbar mit demselben Nulldurchgang aber der invertierten Amplitude bestimmbar.

Wie beschrieben, wird die FFT in einem ersten Zeitintervall ausgeführt. In einem nachfolgenden Zeitintervall, insbesondere nachfolgender Zyklus gleicher zeitlichen Länge, wird das als Ansteuersignal für einen oder mehrere steuerbare Halbleiterschalter des dritten Wandlers 3 bestimmte Schaltmuster von der Steuerung 10 an den dritten Wandler herausgegeben und somit das Kompensationssignal in den Zwischenkreis eingebracht.

Vorzugsweise überlappt das zweite mit dem ersten Frequenzband nicht.

Der vierte Wandler 4 wird zum Verringern von periodisch oder quasiperiodischen Störungen verwendet, welche in einem dritten Frequenzband liegen. Hierzu wird der erfasste Spannungsverlauf in einer ersten Zeitspanne, insbesondere Zyklus, erfasst und fouriertransformiert, insbesondere einer FFT unterzogen. Dabei ist die erste Zeitspanne, insbesondere Zyklus, kürzer als die erste Zeitspanne des dritten Wandlers 3 Das derart transformierte Signal wird auf Maxima und/oder Spitzenwertewerden untersucht. Lokale Maxima, welche deutlich aus dem Rauschen hervorragen, werden der Bestimmung eines dritten Kompensationssignals zugrunde gelegt. Zu jedem bestimmten Maximum wird durch Rücktransformation und Phasenverschiebung um 180° wiederum ein drittes Kompensationssignal bestimmt, welches den mit der zum jeweiligen Maximum gehörigen Frequenz periodischen Signalanteil kompensiert, also zum Verschwinden bringt.

Das dritte Kompensationssignal weist eine viel höhere Frequenz auf als das für den zweiten Wandler 2 berechnete, insbesondere dritte Kompensationssignal.

Der Rechenaufwand zur Bestimmung des dritten Kompensationssignals ist bei diskret abgetasteten Signalen gering. Es muss nur der Nulldurchgang des mit der zum jeweiligen Maximum gehörigen Frequenz periodischen Signalanteils bestimmt werden und das dritte Kompensationssignal ist unmittelbar mit demselben Nulldurchgang aber der invertierten Amplitude bestimmbar.

Wie beschrieben, wird die FFT in einem ersten Zeitintervall ausgeführt. In einem nachfolgenden Zeitintervall, insbesondere nachfolgender Zyklus gleicher zeitlichen Länge, wird das als Ansteuersignal für einen oder mehrere steuerbare Halbleiterschalter des vierten Wandlers 4 bestimmte Schaltmuster von der Steuerung 10 an den vierten Wandler herausgegeben und somit das vierte Kompensationssignal in den Zwischenkreis eingebracht.

Vorzugsweise überlappt das dritte mit dem zweiten Frequenzband nicht.

Vorzugswiese wird bei der Bestimmung des Kompensationssignals der Nulldurchgang, also die Phase um einen zusätzlichen Betrag zeitlich versetzt, welcher der Totzeit entspricht, welche zur Erfassung des Istwerts, der Fouriertransformation und der weiteren Schritte bis zur Herausgabe der Schaltmuster benötigt wird. Insbesondere sind die Totzeiten beim ersten, zweiten und dritten Kompensationssignal unterschiedlich groß.

Da die Erfassung der Spannungswerte oder Stromwerte des Zwischenkreises zentral mittels des Sensors 9 erfolgt und der Verlauf der erfassten Werte digital und zentral in der Steuerung 10 hinterlegt ist, muss für die Bestimmung der jeweiligen Kompensationssignale nur auf die somit in der Steuerung 10 vorhandenen Werte zugegriffen werden.

Um ein Entleeren der Energiespeicher (11, 12, 13) zu verhindern, sind die Wandler (2, 3, 4) bidirektional ausgeführt. Wenn aber beispielsweise der Zwischenkreis im Wesentlichen nur eine einzige hochfrequente Störung aufweist, ist ein Entleeren des Energiespeichers 13 möglich.

Zur Abstützung der Energiespeicher (11, 12, 13) stellt das Versorgungsmodul 8 eine weitere Gleichspannung zur Verfügung, die über einen jeweiligen Wandler (7, 6, 5) einem jeweiligen Energiespeicher (11, 12, 13) eine Ladespannung oder einen Ladestrom bereitstellt und somit ein vollständiges Entleeren verhindert ist.

Vorzugsweise wird die Gleichspannung über einen weiteren Zwischenkreis zur Verfügung gestellt.

Die Ansteuerung der Wandler (7,6, 5) erfolgt ebenfalls aus der Steuerung 10.

Die Wandler (7, 6, 5) sind vorzugsweise jeweils als bidirektional arbeitender DC/DC-Steller oder Stromsteller ausgeführt.

Der erste gleichspannungsseitige Anschluss des Wandlers 7 ist aus einem T-Knoten des weiteren Zwischenkreises gespeist und mit diesem Verbunden. Mit seinem anderen Anschluss stellt der Wandler 7 dem Energiespeicher 11 und/oder einer Ladeschaltung des Energiespeichers 11 eine Ladespannung zum Aufladen des Energiespeichers zur Verfügung.

Der erste gleichspannungsseitige Anschluss des Wandlers 6 ist aus einem T-Knoten des weiteren Zwischenkreises gespeist und mit diesem verbunden. Mit seinem anderen Anschluss stellt der Wandler 6 dem Energiespeicher 12 und/oder einer Ladeschaltung des Energiespeichers 12 eine Ladespannung zum Aufladen des Energiespeichers zur Verfügung.

Der erste gleichspannungsseitige Anschluss des Wandlers 5 ist aus einem T-Knoten des weiteren Zwischenkreises gespeist und mit diesem Verbunden. Mit seinem anderen Anschluss stellt der Wandler 5 dem Energiespeicher 13 und/oder einer Ladeschaltung des Energiespeichers 13 eine Ladespannung zum Aufladen des Energiespeichers zur Verfügung.

Die Steuerung ist mittels eines Datenbusses 14, insbesondere Ethernet-Bus, mit einem oder mehreren weiteren Rechnern zum Datenaustausch verbunden.

Bei weiteren erfindungsgemäßen Ausführungsbeispielen wird die jeweilige erste Zeitspanne, insbesondere also die Zykluszeit, angepasst, wenn ein Maximum oder eines der Maxima nach Ausführen der FFT nahe am Rand des jeweiligen Frequenzbandes, also nahe an der oberen Grenzfrequenz des bestimmbaren Fourierspektrums, angeordnet ist, insbesondere näher als ein Mindestfrequenzabstand vom Rand des Frequenzbandes.

Denn durch die diskrete Abtastung ist das Fourierspektrum endlich, weist also eine untere und eine obere Grenzfrequenz auf. Als Frequenzband wird hier der Frequenzberiech zwischen der unteren und der oberen Grenzfrequenz bezeichnet.

### Bezugszeichenliste

1 Wandler, insbesondere bidirektional arbeitender DC/DC-Steller oder Stromsteller
2 Wandler, insbesondere bidirektional arbeitender DC/DC-Steller oder Stromsteller
3 Wandler, insbesondere bidirektional arbeitender DC/DC-Steller oder Stromsteller
4 Wandler, insbesondere bidirektional arbeitender DC/DC-Steller oder Stromsteller
5 Wandler, insbesondere bidirektional arbeitender DC/DC-Steller oder Stromsteller
6 Wandler, insbesondere bidirektional arbeitender DC/DC-Steller oder Stromsteller
7 Wandler, insbesondere bidirektional arbeitender DC/DC-Steller oder Stromsteller
8 netzgespeistes Versorgungsmodul
9 Sensor, insbesondere zur Erfassung der Spannung und/oder des Stromes
10 Steuerung
11 erster Energiespeicher
12 zweiter Energiespeicher
13 dritter Energiespeicher
14 Datenbus, insbesondere Ethernet-Bus

## Patentansprüche

1. System, insbesondere Energieversorgungssystem, zur Speisung eines Zwischenkreises,
wobei ein Sensor zur Erfassung eines Stromes im Zwischenkreis oder einer Spannung am Zwischenkreis mit einer Steuerung verbunden ist, welche einen zweiten Wandler (2), insbesondere DC/DC-Wandler oder Stromsteller, ansteuert,
wobei ein erster Energiespeicher (11) über den zweiten Wandler (2) mit dem Zwischenkreis verbunden ist,
wobei der Zwischenkreis von dem ersten Energiespeicher (11) über den zweiten Wandler (2) stützbar ist,
wobei am ersten Anschluss des zweiten Wandlers (2) der erste Energiespeicher (11) und der zweite Anschluss des zweiten Wandlers (2) mit dem Zwischenkreis und dem Sensor verbunden ist,
wobei die Steuerung einen dritten Wandler (3), insbesondere DC/DC-Wandler oder Stromsteller, ansteuert,
wobei ein zweiter Energiespeicher (12) über den dritten Wandler (3) mit dem Zwischenkreis verbunden ist,
wobei der Zwischenkreis von dem zweiten Energiespeicher (12) über den dritten Wandler (3) stützbar ist,
wobei am ersten Anschluss des dritten Wandlers (3) der zweite Energiespeicher (12) und der zweite Anschluss des dritten Wandlers (3) mit dem Zwischenkreis und dem Sensor verbunden ist,
**dadurch gekennzeichnet, dass**
die Steuerung einen vierten Wandler (4), insbesondere DC/DC-Wandler oder Stromsteller, ansteuert,
wobei ein dritter Energiespeicher (13) über den vierten Wandler (4) mit dem Zwischenkreis verbunden ist,
wobei der Zwischenkreis von dem dritten Enegiespeicher (13) über den vierten Wandler (4) stützbar ist,
wobei am ersten Anschluss des vierten Wandlers (4) der dritte Energiespeicher (13) und der zweite Anschluss des vierten Wandlers (4) mit dem Zwischenkreis und dem Sensor verbunden ist,
wobei der erste, dritte und der zweite Energiespeicher (11, 12, 13) unterschiedlich sind, indem der erste, dritte und der zweite Energiespeicher (11, 12, 13) ein unterschiedliches dynamisches Verhalten aufweisen und unterschiedliche Entladezeitkonstanten aufweisen,
wobei die Steuerung einen ersten Wandler (1), insbesondere DC/DC-Wandler oder Stromsteller, ansteuert,
der aus einem Versorgungsmodul gespeist ist, welches an dem ersten Anschluss des ersten Wandlers (1) angeschlossen ist,
wobei der zweite Anschluss des ersten Wandlers (1) mit dem Zwischenkreis elektrisch verbunden ist, insbesondere am Zwischenkreis angeschlossen ist,
insbesondere wobei das Versorgungsmodul einen netzgespeisten Gleichrichter aufweist, wobei zur Abstützung der Energiespeicher (11, 12, 13) das Versorgungsmodul (8) eine weitere Gleichspannung zur Verfügung stellt, die über einen jeweiligen Wandler (7, 6, 5) einem jeweiligen Energiespeicher (11, 12, 13) eine Ladespannung oder einen Ladestrom bereitstellt und somit ein vollständiges Entleeren verhindert ist,
insbesondere wobei die weitere Gleichspannung über einen weiteren Zwischenkreis zur Verfügung gestellt wird,
wobei die Ansteuerung über einen jeweiligen Wandler (7,6, 5) von der Steuerung (10) ausgeführt wird.

2. System nach Anspruch 1,
**dadurch gekennzeichnet, dass**
der erste Energiespeicher einen Akkumulator aufweist und der zweite Energiespeicher einen Elektrolytkondensator oder Doppelschichtkondensator aufweist
oder dass
der erste Energiespeicher einen Akkumulator, der zweite Energiespeicher einen Elektrolytkondensator und der dritte Energiespeicher einen Doppelschichtkondensator aufweist.

3. System nach einem der vorangegangenen Ansprüche,
**dadurch gekennzeichnet, dass**
die Steuerung einen fünften Wandler (5), insbesondere DC/DC-Wandler oder Stromsteller, ansteuert,
aus dem der dritte Energiespeicher aufladbar ist.

4. System nach einem der vorangegangenen Ansprüche,
**dadurch gekennzeichnet, dass**
die Steuerung einen sechsten Wandler (6), insbesondere DC/DC-Wandler oder Stromsteller, ansteuert,
aus dem der zweite Energiespeicher aufladbar ist.

5. System nach einem der vorangegangenen Ansprüche,
**dadurch gekennzeichnet, dass**
die Steuerung einen siebten Wandler (7), insbesondere DC/DC-Wandler oder Stromsteller, ansteuert,
aus dem der erste Energiespeicher aufladbar ist.

6. System nach einem der vorangegangenen Ansprüche,
**dadurch gekennzeichnet, dass**
der fünfte, sechste und/oder siebte Wandler (5, 6, 7) aus dem Versorgungsmodul gespeist ist oder sind.

7. System nach einem der vorangegangenen Ansprüche,
**dadurch gekennzeichnet, dass**
die Steuerung mittels eines Datenbusses mit einem übergeordneten Rechner verbunden ist, insbesondere zum Datenaustausch.

8. Verfahren zum Betreiben eines Systems nach einem der vorangegangenen Ansprüche,
wobei zeitlich wiederkehrend Werte einer physikalischen Größe, insbesondere Stromwert im Zwischenkreis oder Spannung am Zwischenkreis, erfasst werden,
**dadurch gekennzeichnet, dass**
in einem ersten Verfahrensschritt ein Verlauf der in einer ersten Zeitspanne, insbesondere Zykluszeit, erfassten Werte fouriertransformiert wird, insbesondere eine FFT durchgeführt wird,
wobei in einem zweiten Verfahrensschritt zumindest ein Maximum, insbesondere ein lokales Maximum, des fouriertransformierten Verlaufs bestimmt wird und ein auf die zum jeweiligen Maximum gehörige Frequenz gerichtetes erstes Kompensationssignal erzeugt wird und dem Zwischenkreis zugeführt wird, insbesondere mittels des ersten Wandlers,
wobei in dem ersten Verfahrensschritt der Verlauf der in einer zweiten Zeitspanne, insbesondere Zykluszeit, erfassten Werte fouriertransformiert wird, insbesondere eine FFT durchgeführt wird,
wobei zumindest ein Maximum, insbesondere ein lokales Maximum, des in der zweiten Zeitspanne erfassten Verlaufs, fouriertransformierten Verlaufs bestimmt wird und ein auf die zu diesem jeweiligen Maximum gehörige Frequenz gerichtetes zweites Kompensationssignal bestimmt wird und dem Zwischenkreis zugeführt wird, insbesondere mittels des zweiten Wandlers.

9. Verfahren nach Anspruch 8,
**dadurch gekennzeichnet, dass**
die erste Zeitspanne länger ist als die zweite Zeitspanne,
wobei die erste Zeitspanne mit der zweiten Zeitspanne überlappt.

10. Verfahren nach Anspruch 9 oder 8,
**dadurch gekennzeichnet, dass**
in dem ersten Verfahrensschritt der Verlauf der in einer dritten Zeitspanne, insbesondere Zykluszeit, erfassten Werte fouriertransformiert wird, insbesondere eine FFT durchgeführt wird,
wobei zumindest ein Maximum, insbesondere ein lokales Maximum, des in der dritten Zeitspanne erfassten Verlaufs, fouriertransformierten Verlaufs bestimmt wird und ein auf die Frequenz gerichtetes drittes Kompensationssignal bestimmt wird und dem Zwischenkreis zugeführt wird, insbesondere mittels des dritten Wandlers,
insbesondere wobei die dritte Zeitspanne kürzer ist als die zweite Zeitspanne.

11. Verfahren nach einem der Ansprüche 8 bis 10,
**dadurch gekennzeichnet, dass**
das jeweilige Kompensationssignal unter Berücksichtigung der zumindest durch das Fouriertransformieren bewirkten Totzeit derart gewählt wird, dass es einer zu dem Maximum gehörenden periodischen Störung entgegenwirkt.

12. Verfahren nach einem der Ansprüche 8 bis 11,
**dadurch gekennzeichnet, dass**
zeitlich wiederkehrend die Verfahrensschritte wiederholt werden mit einer jeweiligen Zeitspanne, welche derart gewählt ist, dass das zuvor bestimmte Maximum einen Mindestfrequenzabstand von der unteren und oberen Grenzfrequenz aufweist.

## Claims

1. System, in particular a power supply system, for feeding a DC link,
wherein a sensor for detecting a current in the DC link or a voltage at the DC link is connected to a controller that actuates a second converter (2), in particular a DC-to-DC converter or current regulator,
wherein a first energy storage device (11) is connected to the DC link by means of the second converter (2),
wherein the DC link can be supported by the first energy storage device (11) by means of the second converter (2),
wherein the first energy storage device (11) is connected to the first terminal of the second converter (2), and the second terminal of the second converter (2) is connected to the DC link and the sensor,
wherein the controller actuates a third converter (3), in particular a DC-to-DC converter or current regulator,
wherein a second energy storage device (12) is connected to the DC link by means of the third converter (3),
wherein the DC link can be supported by the second energy storage device (12) by means of the third converter (3),
wherein the second energy storage device (12) is connected to the first terminal of the third converter (3), and the second terminal of the third converter (3) is connected to the DC link and the sensor,
**characterised in that**
the controller actuates a fourth converter (4), in particular a DC-to-DC converter or current regulator,
wherein a third energy storage device (13) is connected to the DC link by means of the fourth converter (4),
wherein the DC link can be supported by the third energy storage device (13) by means of the fourth converter (4),
wherein the third energy storage device (13) is connected to the first terminal of the fourth converter (4), and the second terminal of the fourth converter (4) is connected to the DC link and the sensor,
wherein the first, third and second energy storage devices (11, 12, 13) are different **in that** the first, third and second energy storage devices (11, 12, 13) have different dynamic behaviour and have different discharge time constants,
wherein the controller actuates a first converter (1), in particular a DC-to-DC converter or current regulator,
which is fed from a power supply module coupled to the first terminal of the first converter (1),
wherein the second terminal of the first converter (1) is electrically connected to the DC link, in particular is coupled to the DC link,
in particular wherein the power supply module has a mains-powered rectifier,
wherein, in order to support the energy storage devices (11, 12, 13), the power supply module (8) provides a further DC voltage which provides a charging voltage or a charging current to each energy storage device (11, 12, 13) by means of a respective converter (7, 6, 5), thus preventing complete draining,
in particular wherein the further DC voltage is provided by means of a further DC link, wherein the actuation is executed by the controller (10) by means of a respective converter (7, 6, 5).

2. System according to claim 1,
**characterised in that**
the first energy storage device has an accumulator, and the second energy storage device has an electrolytic capacitor or an electric double-layer capacitor
or **in that**
the first energy storage device has an accumulator, the second energy storage device has an electrolytic capacitor and the third energy storage device has an electric double-layer capacitor.

3. System according to any of the preceding claims,
**characterised in that**
the controller actuates a fifth converter (5), in particular a DC-to-DC converter or current regulator,
from which the third energy storage device can be charged.

4. System according to any of the preceding claims,
**characterised in that**
the controller actuates a sixth converter (6), in particular a DC-to-DC converter or current regulator,
from which the second energy storage device can be charged.

5. System according to any of the preceding claims,
**characterised in that**
the controller actuates a seventh converter (7), in particular a DC-to-DC converter or current regulator,
from which the first energy storage device can be charged.

6. System according to any of the preceding claims,
**characterised in that**
the fifth, sixth and/or seventh converter (5, 6, 7) is/are fed from the power supply module.

7. System according to any of the preceding claims,
**characterised in that**
the controller is connected to a superordinate computer by means of a data bus, in particular for data exchange.

8. Method for operating a system according to any of the preceding claims,
wherein values of a physical variable, in particular a current value in the DC link or a voltage at the DC link, are detected recurrently over time,
**characterised in that**
in a first method step, a curve of the values detected in a first time period, in particular cycle time, is Fourier-transformed, in particular an FFT is carried out,
wherein, in a second method step, at least one maximum, in particular a local maximum, of the Fourier-transformed curve is determined, and a first compensation signal targeted at the frequency associated with the particular maximum is generated and supplied to the DC link, in particular by means of the first converter,
wherein, in the first method step, the curve of the values detected in a second time period, in particular cycle time, is Fourier-transformed, in particular an FFT is carried out,
wherein at least one maximum, in particular a local maximum, of the curve detected in the second time period, the Fourier-transformed curve, is determined, and a second compensation signal targeted at the frequency associated with this particular maximum is determined and supplied to the DC link, in particular by means of the second converter.

9. Method according to claim 8,
**characterised in that**
the first time period is longer than the second time period,
wherein the first time period overlaps with the second time period.

10. Method according to claim 9 or claim 8,
**characterised in that**
in the first method step, the curve of the values detected in a third time period, in particular cycle time, is Fourier-transformed, in particular an FFT is carried out,
wherein at least one maximum, in particular a local maximum, of the curve detected in the third time period, the Fourier-transformed curve, is determined, and a third compensation signal targeted at the frequency is determined and supplied to the DC link, in particular by means of the third converter,
in particular wherein the third time period is shorter than the second time period.

11. Method according to any of claims 8 to 10,
**characterised in that**
each compensation signal is selected in such a way, in consideration of the delay caused at least by the Fourier transform, that said compensation signal counteracts periodic interference associated with the maximum.

12. Method according to any of claims 8 to 11,
**characterised in that**
the method steps are repeated recurrently over time using a particular time period that is selected such that the previously determined maximum has a minimum frequency spacing from the lower and upper cut-off frequencies.

## Revendications

1. Système, en particulier système d'alimentation en énergie, permettant d'alimenter un circuit intermédiaire,
un capteur qui permet de détecter un courant au sein du circuit intermédiaire ou une tension au niveau du circuit intermédiaire étant connecté à une commande qui pilote un deuxième convertisseur (2), en particulier un convertisseur CC/CC ou un régulateur de courant,
un premier accumulateur d'énergie (11) étant connecté au circuit intermédiaire par l'intermédiaire du deuxième convertisseur (2),
le circuit intermédiaire pouvant être assisté par le premier accumulateur d'énergie (11) par l'intermédiaire du deuxième convertisseur (2),
le premier accumulateur d'énergie (11) et la deuxième borne du deuxième convertisseur (2) étant connectés au circuit intermédiaire et au capteur au niveau de la première borne du deuxième convertisseur (2),
ladite commande pilotant un troisième convertisseur (3), en particulier un convertisseur CC/CC ou un régulateur de courant,
un premier accumulateur d'énergie (12) étant connecté au circuit intermédiaire par l'intermédiaire du troisième convertisseur (3),
le circuit intermédiaire pouvant être assisté par le deuxième accumulateur d'énergie (12) par l'intermédiaire du troisième convertisseur (3),
le premier accumulateur d'énergie (12) et la deuxième borne du troisième convertisseur (2) étant connectés au circuit intermédiaire et au capteur au niveau de la première borne du troisième convertisseur (2),
**caractérisé en ce que**
ladite commande pilote un quatrième convertisseur (4), en particulier un convertisseur CC/CC ou un régulateur de courant,
un troisième accumulateur d'énergie (13) étant connecté au circuit intermédiaire par l'intermédiaire du quatrième convertisseur (4),
le circuit intermédiaire pouvant être assisté par le troisième accumulateur d'énergie (13) par l'intermédiaire du quatrième convertisseur (4),
le troisième accumulateur d'énergie (13) et la deuxième borne du quatrième convertisseur (2) étant connectés au circuit intermédiaire et au capteur au niveau de la première borne du quatrième convertisseur (2),
les premier, troisième et deuxième accumulateurs d'énergie (11, 12, 13) étant différents, les premier, troisième et deuxième accumulateurs d'énergie (11, 12, 13) présentant un comportement dynamique différent et présentant des constantes de temps de décharge différentes,
ladite commande pilotant un premier convertisseur (1), en particulier un convertisseur CC/CC ou un régulateur de courant,
qui est alimenté par un module d'alimentation qui est connecté à la première borne du premier convertisseur (1),
la deuxième borne du premier convertisseur (1) étant connectée électriquement au circuit intermédiaire, en particulier étant raccordée au circuit intermédiaire,
le module d'alimentation présentant en particulier un redresseur alimenté par le secteur,
le module d'alimentation (8) fournissant, afin d'assister les accumulateurs d'énergie (11, 12, 13), une tension continue supplémentaire qui fournit une tension de charge ou un courant de charge à un accumulateur d'énergie (11, 12, 13) respectif par l'intermédiaire d'un convertisseur (7, 6, 5) respectif, ce qui empêche une décharge complète,
la tension continue supplémentaire étant en particulier fournie par l'intermédiaire d'un autre circuit intermédiaire,
le pilotage étant mis en œuvre par la commande (10) par l'intermédiaire d'un convertisseur (7,6, 5) respectif.

2. Système selon la revendication 1,
**caractérisé en ce que**
le premier accumulateur d'énergie présente un accumulateur et le second accumulateur d'énergie présente un condensateur électrolytique ou un condensateur à double couche
ou **en ce que**
le premier accumulateur d'énergie présente un accumulateur, le deuxième accumulateur d'énergie présente un condensateur électrolytique et le troisième accumulateur d'énergie présente un condensateur à double couche.

3. Système selon l'une quelconque des revendications précédentes,
**caractérisé en ce que**
ladite commande pilote un cinquième convertisseur (5), en particulier un convertisseur CC/CC ou un régulateur de courant,
à partir duquel le troisième accumulateur d'énergie peut être chargé.

4. Système selon l'une quelconque des revendications précédentes,
**caractérisé en ce que**
ladite commande pilote un sixième convertisseur (6), en particulier un convertisseur CC/CC ou un régulateur de courant,
à partir duquel le deuxième accumulateur d'énergie peut être chargé.

5. Système selon l'une quelconque des revendications précédentes,
**caractérisé en ce que**
ladite commande pilote un septième convertisseur (7), en particulier un convertisseur CC/CC ou un régulateur de courant,
à partir duquel le premier accumulateur d'énergie peut être chargé.

6. Système selon l'une quelconque des revendications précédentes,
**caractérisé en ce que**
le cinquième, le sixième et/ou le septième convertisseur (5, 6, 7) est ou sont alimenté(s) par le module d'alimentation.

7. Système selon l'une quelconque des revendications précédentes,
**caractérisé en ce que**
ladite commande est reliée au moyen d'un bus de données à un ordinateur ayant autorité, en particulier en vue de l'échange de données.

8. Procédé de fonctionnement d'un système selon l'une quelconque des revendications précédentes,
des valeurs d'une grandeur physique, en particulier une valeur de courant au sein du circuit intermédiaire ou une tension au niveau du circuit intermédiaire, sont enregistrées de manière récurrente dans le temps,
**caractérisé en ce que**
dans une première étape de procédé, une courbe des valeurs enregistrées dans une première période de temps, en particulier le temps de cycle, est soumis à une transformation de Fourier, en particulier à une transformation de Fourier rapide,
dans une deuxième étape de procédé, au moins un maximum, en particulier un maximum local, de la courbe soumise à une transformation de Fourier étant déterminé et un premier signal de compensation dirigé vers la fréquence associée au maximum respectif étant généré et envoyé au circuit intermédiaire, en particulier au moyen du premier convertisseur,
dans la première étape de procédé, la courbe des valeurs enregistrées dans une deuxième période de temps, en particulier le temps de cycle, étant soumise à une transformation de Fourier, en particulier à une transformation de Fourier rapide,
au moins un maximum, en particulier un maximum local, de la courbe enregistrée dans la deuxième période de temps, courbe qui a été soumise à une transformation de Fourier, étant déterminé et un deuxième signal de compensation dirigé vers la fréquence associée audit maximum respectif étant déterminé et envoyé au circuit intermédiaire, en particulier au moyen du deuxième convertisseur.

9. Procédé selon la revendication 8,
**caractérisé en ce que**
la première période de temps est plus longue que la deuxième période de temps,
la première période de temps chevauche la deuxième période de temps.

10. Procédé selon la revendication 9 ou 8,
**caractérisé en ce que**
dans la première étape de procédé, la courbe des valeurs enregistrées dans une deuxième période de temps, en particulier le temps de cycle, est soumise à une transformation de Fourier, en particulier à une transformation de Fourier rapide,
au moins un maximum, en particulier un maximum local, de la courbe enregistrée dans la troisième période de temps, courbe qui a été soumise à une transformation de Fourier, étant déterminé et un troisième signal de compensation dirigé vers la fréquence étant déterminé et envoyé au circuit intermédiaire, en particulier au moyen du troisième convertisseur,
la troisième période de temps étant plus courte que la deuxième période de temps.

11. Procédé selon l'une quelconque des revendications 8 à 10,
**caractérisé en ce que**
le signal de compensation respectif, en tenant compte du temps mort provoqué au moins par la transformation de Fourier, est choisi de manière à contrer une perturbation périodique associée au maximum.

12. Procédé selon l'une quelconque des revendications 8 à 11,
**caractérisé en ce que**
les étapes de procédé sont répétées de manière récurrente dans le temps avec une période de temps respective choisie de telle manière que le maximum déterminé au préalable présente un intervalle de fréquence minimal par rapport aux fréquences limites inférieure et supérieure.
